# EUROPÄISCHE PATENTANMELDUNG

(11) **EP 1 331 617 A2**
(43) Veröffentlichungstag der Anmeldung: **30.07.2003**
(21) Anmeldenummer: 02102525.9
(22) Anmeldetag: 04.11.2002
(51) Int. Cl.: G07F 19/00, G07F 7/08

(54) **Verfahren und Anordung zur Durchführung einer bargeldlosen Zahlungstransaktion**

(30) Priorität: 15.11.2001 DE 10156177
(71) Anmelder: SIEMENS AKTIENGESELLSCHAFT, 80333 München (DE)
(72) Erfinder: Horn, Michael, 81739 München (DE)

(57) **Zusammenfassung**

Verfahren zur Durchführung einer bargeldlosen Zahlungstransaktion mittels einer Händlerstation (2), einem Mobilfunk-Endgerät (1) eines Nutzers mit einer SIM-Karte, die mit einer identifizierenden Kennung versehen ist, und einer Zentralstation (3), die über ein Datennetz mit dem Mobilfunk-Endgerät (1) und der Händlerstation (2) verbunden ist, wobei ein erstes elektronisches Guthaben zur bargeldlosen Bezahlung einer Telefonie-Dienstleistung einem ersten Konto zugeordnet und in einem ersten Guthabenspeicher gespeichert wird, und ein zweites elektronisches Guthaben zur bargeldlosen Bezahlung einer Ware oder Dienstleistung einem zweiten Konto zugeordnet und in einem zweiten Guthabenspeicher gespeichert wird, wobei das erste und das zweite Konto in einer Benutzerschnittstelle als ein gemeinsames Konto zusammengefaßt werden.

## Beschreibung

Die Erfindung betrifft ein Verfahren nach dem Oberbegriff des Anspruchs 1 sowie eine zu dessen Durchführung geeignete Anordnung.

Im zunehmenden Maße setzen sich bargeldlose Zahlungstransaktionen durch. Gründe dafür sind u. a. darin zu sehen, daß Käufer nicht immer große Geldbeträge mit sich zu führen brauchen, um größere Einkäufe tätigen zu können. Somit wird zum einen das Diebstahlrisiko herabgesetzt, zum anderen werden aber auch Spontankäufe ermöglicht. Zudem erübrigt sich auf der Seite der Verkäufer die Handhabung großer Geldbeträge.

In der Vergangenheit wurden deswegen Kreditkarten eingeführt, bei denen der Karteninhaber mit einer gültigen Kreditkarte und durch seine Unterschrift, oder oft auch nur mit der Nummer der Kreditkarte, eine bargeldlose Zahlung ausführen kann. Allerdings ist hier das Mißbrauchsrisiko hoch, da Kreditkarten leicht gestohlen und nach Fälschung der Unterschrift unberechtigt benutzt werden können.

Aufgrund der in Verbindung mit der Kreditkarte anfallenden hohen Transaktionsgebühren sind als Alternative SmartCards mit einer integrierten Prozessor-Speichereinheit entwickelt worden. Bei diesen SmartCards wird Verschlüsselungstechnologie verwendet, um Geldbeträge so auf der Karte speichern zu können, daß das Laden der Karte nur über autorisierte Institutionen erfolgen kann. Zur Zahlung größerer Beträge ist eine PIN vorgesehen, die bei Zahlung direkt von der SmartCard überprüft wird. Diese Art der Zahlung erfordert jedoch zur Überschreitung der Akzeptanzschwelle ein dichtes Netz von Ladestationen. Darüber hinaus müssen die Händler entsprechende Lesestationen bereitstellen.

Im zunehmenden Maße erlangen daher bargeldlose Zahlungen mittels eines Mobilfunk-Endgerätes eine Marktdurchdringung. Bei diesem Verfahren wird an einer Händlerstation ein Geldbetrag für eine von einem Käufer erworbenen Ware, beispielsweise über ein mit der Händlerstation verbundenes Kassensystem, eingelesen oder direkt über eine Eingabeeinrichtung der Händlerstation eingegeben. Dieser Betrag wird zusammen mit einer Kennung der Händlerstation an eine Zentralstation übertragen, wo die Daten zwischengespeichert werden. Über ein Mobilfunk-Endgerät sendet der Zahlende die Kennung der Händlerstation an die Zentralstation, die die Kennung mit der der gespeicherten Daten vergleicht und den entsprechenden Geldbetrag an das Mobilfunk-Endgerät übermittelt. Dort wird eine Bestätigung der Zahlung abgefragt und an die Zentralstation übermittelt, die eine entsprechende Buchung an eine kontoführende Einrichtung, beispielsweise ein Kreditinstitut, bei dem der Zahlende ein Konto hält, übermittelt. Somit werden für dieses Verfahren ein Mobilfunk-Endgerät benötigt, eine Händlerstation und eine Zentralstation, die mit dem Mobilfunk-Endgerät und der Händlerstation über Telekommunikations- und/oder Datenverbindungen verbunden ist.

Diese Art der bargeldlosen Zahlung kann mobil an verschiedensten Orten, unter anderem auch an Verkaufsautomaten (vending machines) oder in Taxis, ausgeführt werden. Im Gegensatz zur Verwendung von Kreditkarten ist durch die temporäre Mobilfunk-Telefonverbindung und die Eingabe der Bestätigung während dieser Zeit für den Händler eine Verwendung von während der Verbindung ausgetauschten Daten für spätere Transaktionen nicht möglich. Weiterhin ist es durch die Einbindung der Zentralstation möglich, die Zahlung durchzuführen, ohne daß sicherheitsrelevante Daten des Käufers, wie beispielsweise die Kennung, an den Händler gelangen. Dadurch wird eine anonymisierte Zahlung gewährleistet.

Außerdem können Käufer, die schon ein Mobilfunk-Endgerät besitzen diese Form der Bezahlung sehr einfach und billig ausführen. Das ist deshalb ein besonderer Vorteil, weil Mobiltelefone schon sehr verbreitet sind, so daß ein großer Nutzerkreis ohne weitere Investitionen dieses System nutzen kann. Dieses Verfahren ist zudem zur Transaktion von Kleinstbeträgen geeignet.

Die bargeldlose Bezahlung mittels eines Mobilfunk-Endgeräts ist unabhängig von der Art des Mobilfunkvertrages. Somit können auch Benutzer mit einem Mobilfunk-Endgerät, das über ein Prepaid-Konto geführt wird, bargeldlos bei einem Händler bezahlen. Bei den Händlern kann es sich sowohl um virtuelle (also Betreiber eines E-Shops) als auch um Betreiber von realen Shops handeln.

Im Mobilfunkmarkt haben heute bereits weltweit etwa ein Drittel aller Mobilfunkkunden ein sogenanntes Prepaid-Konto, also ein Konto, auf dem vorab Geld eingezahlt wird, für das dann anschließend mobil telefoniert werden kann. In einigen Ländern liegt die Rate der Prepaid-Verträge bei Neuverträgen bei 80% und sogar darüber.

Diese Prepaid-Konten, im folgenden Prepaid-Telefonie-Accounts (PTA) genannt, sind jedoch nicht ohne gravierende Umstellungen für das mobile Bezahlen von Waren, die bei einem Händler eingekauft werden, geeignet. Der Grund dafür liegt darin, daß die Prozesse bei einem Mobilen Network-Operator (MNO) heute so implementiert sind, daß im Moment des Aufladens eines PTA bereits die komplette Mehrwertsteuer für die aufgeladene Summe abgeführt wird. Dieses Verfahren wurde deshalb gewählt, weil der eingelöste Betrag als eine Art Gutschein für Telefonie-Services (Sprachübertragung, Universal Number Services, Premium Rate Services, usw.) angesehen wird, die einzig und allein der MNO selbst erbringt. Somit wurde ein aufwendiges Verfahren umgangen, nämlich für jede einzelne Leistung, und seien es nur wenige Pfennige für ein kurzes Telefonat, die Mehrwertsteuer separat abzuführen.

Bei der bargeldlosen Bezahlung mittels eines Mobilfunk-Endgerätes sollen jedoch Waren von Händlern bezahlt werden. Daher kann der bisherige PTA dafür nicht ohne Modifikationen verwendet werden.

Wenn von einem PTA das Geld für eine Bezahlung von Waren eines Händlers abgebucht wird, muß für diese Bezahlung die vorab gezahlte Mehrwertsteuer für diesen Betrag von der Finanzbehörde rückerstattet werden, da für diesen Geldbetrag keine Telefonie-Dienstleistung erbracht wurde und somit der entsprechende Teil der im Voraus bezahlten Mehrwertsteuer zuviel bezahlt wurde. Dieses Vorgehen hat den Vorteil, daß die bisherigen PTAs weiter verwendet werden können. Es wirkt sich allerdings als nachteilig aus, daß die Rückerstattung der Mehrwertsteuer sehr aufwendig und schwierig zu kontrollieren ist.

In einer Alternative wird anstelle des PTA ein neuer Konto- bzw. Account-Typ, im folgenden Mobile Payment Account (MPA) genannt, eingeführt. Dieser Account wird brutto geführt, d. h., es wird keinerlei Mehrwertsteuer von diesem Konto abgeführt, sondern alle Beträge werden brutto ausgezahlt. Die Bezahlung der Mehrwertsteuer obliegt dann dem Händler, der von dem Bruttobetrag bei Zahlungseingang die Mehrwertsteuer, gemäß dem für die Ware gültigen Mehrwertsteuersatz, an die Finanzbehörde abführen muß.

Der MPA würde nicht nur für die bargeldlose Bezahlung für Waren über ein Mobilfunk-Endgerät benutzt, sondern auch für sämtliche Telefonie-Dienstleistungen, die bisher über das PTA geführt würden, könnten über dieses Konto abgeführt werden. In diesem Fall würde der PTA also vom MPA ersetzt, was eine Änderung der Prozesse des MNO zur Folge hätte. Die Änderung müßte dabei vorsehen, daß die Mehrwertsteuer für die Aufladebeträge nun nicht mehr direkt beim Aufladen des Prepaid-Kontos abgeführt wird, sondern erst beim Erbringen der Leistung. Dieses Verfahren hat den Vorteil, daß der Benutzer sich wie bisher nur um ein Konto kümmern muß.

Es wirkt sich jedoch als nachteilig aus, daß damit eine große Umstellung der Prozesse beim MNO einhergeht. Es ist ferner nachteilig, daß der MNO nicht sicherstellen kann, daß der Benutzer einen Mindestumsatz für Telefonie-Dienstleistungen generiert, da der Benutzer ja auch den kompletten Betrag auf dem MPA zur Bezahlung von Waren von Händlern nutzen kann.

Der Erfindung liegt daher die Aufgabe zugrunde, ein Verfahren zur einfachen, sicheren und transparenten bargeldlosen Bezahlung von Waren und Dienstleistungen mittels Mobiltelefon und eine Anordnung zur Durchführung des Verfahrens bereitzustellen.

Diese Aufgabe wird hinsichtlich ihres Verfahrensaspektes durch ein Verfahren mit den Merkmalen des Anspruchs 1 und hinsichtlich ihres Vorrichtungsaspektes durch eine Anordnung mit den Merkmalen des Anspruchs 6 gelöst.

Erfindungsgemäß werden ein erstes elektronisches Guthaben zur bargeldlosen Zahlungstransaktion einer Telefonie-Dienstleistung einem ersten Konto zugeordnet und in einem ersten Speicher gespeichert und ein zweites elektronisches Guthaben zur bargeldlosen Zahlungstransaktion einer Ware und/oder Dienstleistung einem zweiten Konto zugeordnet und in einem zweiten Speicher gespeichert, wobei das erste und das zweite Konto für den Benutzer als ein gemeinsames Konto zusammengefaßt werden. Das erste Konto (PTA) zur Bezahlung einer Telefonie-Dienstleistung ist mehrwertsteuerbelastet. Das zweite Konto soll brutto geführt werden, d.h. es wird keinerlei Mehrwertsteuer von diesem Konto abgeführt. Es wird lediglich zur Bezahlung von Waren und/oder Dienstleistungen benutzt.

Das erste und das zweite Konto werden zusammengefaßt, wobei das zusammengefaßte elektronische Guthaben einem gemeinsamen Konto zugeordnet wird und insbesondere in einem Transaktionsdatenspeicher gespeichert wird. Dabei werden die beiden Konten mittels eines intelligenten Verfahrens derart verknüpft, daß aus Sicht des Benutzers nur noch das gemeinsame Konto - also ein "Summen-Konto" - erkennbar wird. Somit erhält der Benutzer eine klare Übersicht über sein elektronisches Guthaben, was die Akzeptanz dieses Verfahrens erhöht.

Vorteilhafte Weiterbildungen des erfindungsgemäßen Verfahrens sind in den Unteransprüchen angegeben.

In einer bevorzugten Ausführung wird das in dem ersten Speicher gespeicherte elektronische Guthaben mittels einer Umbuchungsfunktion mit einem in dem zweiten Speicher gespeicherten elektronischen Guthaben geladen. Somit wird sichergestellt, daß auf dem ersten Konto immer ein genügend hohes Guthaben zum Bezahlen der Telefonie-Dienstleistung vorhanden ist. Der Benutzer braucht sich jedoch um eine Wiederaufladung des ersten Kontos nicht zu bemühen, da durch die Umbuchungsfunktion automatisch eine Wiederaufladung des ersten Kontos mit einem elektronischen Guthaben aus dem zweiten Konto ausgeführt wird.

In einer bevorzugten Ausführung umfaßt die Umbuchungsfunktion die Teilschritte:
a) Einstellen eines unteren und oberen Konto-Schwellwertes eines elektronischen Guthabens von dem ersten Kontos zum Bezahlen der Telefonie-Dienstleis-tung,
b) Signalisieren des Unterschreitens des unteren Konto-Schwellwertes des ersten Kontos durch Inanspruchnahme der Telefonie-Dienstleistung,
c) Auslösen einer Wiederaufladefunktion bei Unterschreiten des unteren Konto-Schwellwertes und
d) Aufladen des ersten Kontos bis zum oberen Konto-Schwellwert mit einem elektronischen Guthaben von dem zweiten Konto.

Bei einer Abbuchung eines Guthabens aus dem ersten Konto durch Inanspruchnahme einer Telefonie-Dienstleistung wird keine Mehrwertsteuer abgeführt. Erst wenn das Guthaben auf dem ersten Konto den unteren Konto-Schwellwert erreicht oder unterschreitet, wird die Wiederaufladung des ersten Kontos ausgeführt. Erst bei dieser Wiederaufladung des elektronischen Guthabens von dem zweiten Konto auf das erste Konto wird eine Mehrwertsteuer entsprechend des wiederaufgeladenen Guthabens abgeführt. Dies hat den Vorteil, daß die Mehrwertsteuer immer in Tranchen entsprechend des wiederaufgeladenen Guthabens abgeführt wird.

Bevorzugt wird das Verfahren so durchgeführt, daß nach dem Verfahrensschritt d) die weiteren Schritte
d1) Auslösen einer Dezimierfunktion beim Aufladen des ersten Kontos mit dem Aufladungs-Guthaben aus dem zweiten Konto und
d2) Dezimieren des elektronischen Guthabens des zweiten Kontos um das Aufladungs-Guthaben durchgeführt werden.

In einer weiteren Ausführung des Verfahrens wird eine Wiederaufladefunktion des gemeinsamen Kontos in Ansprechen auf das Unterschreiten des oberen Konto-Schwellwertes des ersten Kontos durch die Summe beider Guthaben (d. h. den Kontostand des gemeinsamen Kontos) angeboten, indem der Nutzer über den Kontostand informiert und ihm die Auftragserteilung für eine Wiederauffüllung des Kontos bei seinem Kreditinstitut nahegelegt wird. Dadurch wird sichergestellt, daß immer ein genügend großer Restbetrag zum Nutzen der Telefonie-Dienstleistung vorhanden ist. Somit wird sichergestellt, daß der Benutzer nicht sein komplettes Guthaben für einen Einkauf ausgeben kann, was zur Folge hätte, daß eine bestehende Telefonie-Verbindung nach erfolgter Zahlung abrupt abbrechen würde. Eine notwendige Wiederaufladung des zweiten Kontos wird dem Benutzer beispielsweise mittels einer grafischen Anzeige auf dem Display des Mobilfunk-Endgerätes und/oder eines akustischen Warnhinweises mitgeteilt.

In einer bevorzugten Ausführungsform der Erfindung weist die Zentralstation eine Prozessoreinrichtung auf, die mit einer Benutzer-Prüfeinrichtung und einer Händler-Prüfeinrichtung zur Berechtigungsabfrage eines Händlers und eines Benutzers verbunden ist.

Die Zentralstation weist ferner bevorzugt eine Umbuchungseinrichtung auf, die mit dem ersten Guthabenspeicher, dem zweiten Guthabenspeicher und dem Transaktionsdatenspeicher verbunden ist, zur Durchführung einer Wiederaufladefunktion des ersten Kontos.

Die Guthaben der beiden Konten werden mittels einer geeigneten Verwaltungseinrichtung einem gemeinsamen Konto zugeordnet. Das Guthaben des gemeinsamen Kontos wird in dem Transaktionsdatenspeicher gespeichert, der mit der Umbuchungseinrichtung verbunden ist.

Nachfolgend werden bevorzugte Ausführungsformen der Erfindung anhand der Zeichnungen beschrieben, in denen
Fig. 1 eine schematische Darstellung eines Systems zur bargeldlosen Bezahlung mittels eines Mobilfunk-Endgerätes nach dem Stand der Technik,
Fig. 2 eine schematische Darstellung einer Abbuchung von Telefonie-Dienstleistungen,
Fig. 3 eine schematische Darstellung zum Abbuchen eines Betrages zum Bezahlen von Waren und/oder Dienstleistungen,
Fig. 4 eine schematische Darstellung zur Anzeige des elektronischen Guthabens eines gemeinsamen Kontos und
Fig. 5 eine schematische Darstellung einer Zentralstation zeigen.

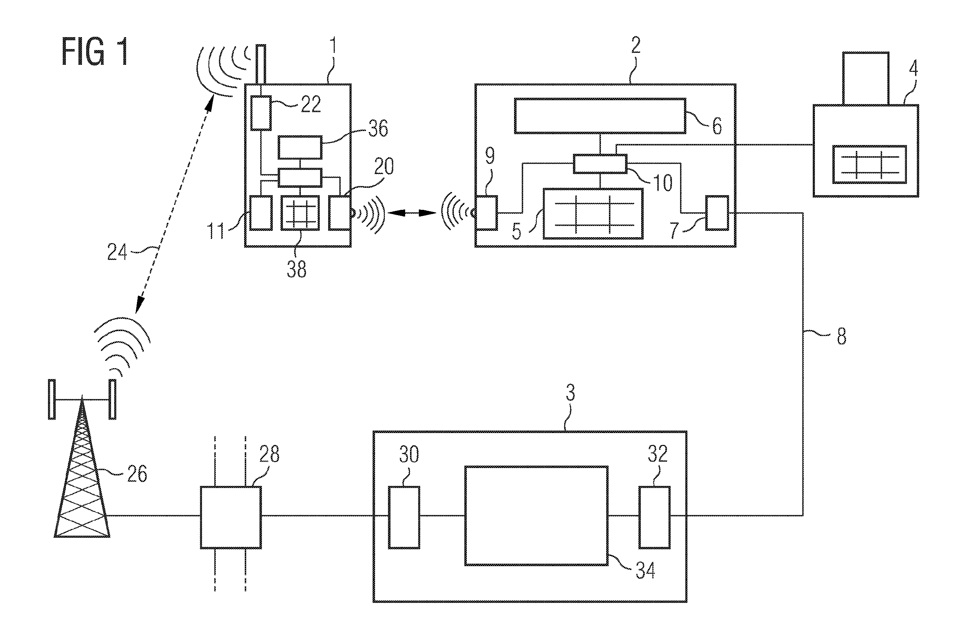

Fig. 1 zeigt in einer schematischen Darstellung ein System zur bargeldlosen Bezahlung mittels eines (im Grundaufbau herkömmlichen) Mobilfunk-Endgerätes 1. Die Figur zeigt das Mobilfunk-Endgerät 1, eine Händlerstation 2 und eine Zentralstation 3, die temporär miteinander verbunden sind.

Die Zentralstation 3 ist über eine Mobilfunkverbindung mit dem Mobilfunk-Endgerät 1 und über eine Datenverbindung mit der Händlerstation 2 verbunden. Die drei Einrichtungen Mobilfunk-Endgerät 1, Händlerstation 2 und Zentralstation 3 haben jeweils identifizierende Kennungen auf, die beispielsweise die Telefonnummern des Mobilfunk-Endgerätes 1, der Händlerstation 2 und der Zentralstation 3 sind. Statt der Telefonnummern können aber auch andere Kennungen, beispielsweise IP-Adressen, verwendet werden.

Will ein Käufer eine Ware und/oder Dienstleistung mit einem elektronischen Guthaben bezahlen, so wird zunächst der Betrag der Ware und/oder Dienstleistung in die Händlerstation 2 eingelesen. Dies geschieht beispielsweise, indem der Betrag zunächst in ein elektronisches Kassensystem 4 eingegeben wird, das mit der Händlerstation 2 verbunden ist. Dann wird der Betrag an die Händlerstation 2 übertragen. Vorzugsweise kann der Betrag auch direkt mittels einer Händlerstation-Eingabeeinrichtung 5, beispielsweise einer Tastatur oder eines Abtastscanners, in die Händlerstation 2 eingelesen werden. Der Betrag wird an einer ersten Ausgabeeinrichtung 6 angezeigt. (An dieser Stelle sei darauf hingewiesen, daß mit dem Begriff "Händlerstation" ein Bestandteil der durch den Systembetreiber bereitgestellten Ausrüstungen bezeichnet ist. Diese ist also nicht Eigentum des Händlers, und der Händler hat auch keinen Zugriff auf die dort eingegebenen und darin verarbeiteten Daten des Kunden.)

Der Betrag wird dann mittels einer ersten Sende-und Empfangseinrichtung 7 an die Zentralstation 3 überwiesen. Zusätzlich zum Betrag wird eine Kennung des Mobilfunk-Endgerätes 1 an die Zentralstation 3 übertragen, wie weiter unten beschrieben. Vorzugsweise werden diese Informationen über eine Datenverbindung 8 übermittelt. Bei der Datenverbindung 8 kann es sich auch um jede geeignete Art von Telekommunikationsverbindung handeln.

Die Händlerstation 2 weist ferner eine zweite Sende-und Empfangseinrichtung 9 zum Empfangen der Kennung des Mobilfunk-Endgerätes 1 auf. Dabei kann es sich um eine Infrarotschnittstelle oder um ein Bluetooth-Modul handeln. Die erste und zweite Sende-und Empfangseinrichtung 7, 9 und die Eingabeund Ausgabeeinrichtung 5, 6 sind mit einer ersten Prozessoreinrichtung 10 verbunden.

Das Mobilfunk-Endgerät 1 weist eine an sich bekannte SIM-Karte 11, die über die Eingabe einer PIN aktiviert werden muß, auf. Über diese SIM-Karte 11 wird die Kennung des Mobilfunk-Endgerätes 1 generiert. Außerdem weist das Mobilfunk-Endgerät 1 zum Austausch von Daten eine dritte Sende-und Empfangseinrichtung 20 auf, die beispielsweise wieder durch die bereits erwähnte Infrarot-Schnittstelle oder das Bluetooth-Modul gebildet ist. Bei den ausgetauschten Daten handelt es sich dabei um die Kennung des Mobilfunk-Endgerätes 1. Daneben kann auch die Kennung der Händlerstation 2 an das Mobilfunk-Endgerät 1 übertragen werden und/oder eine Information über den zu zahlenden Geldbetrag. Zusätzlich überträgt das Mobilfunk-Endgerät 1 seine Kennung mittels einer vierten Sende-und Empfangseinrichtung 22 über eine Luftschnittstelle 24 an eine GSM-Basisstation 26. Die Kennung wird dann - z. B. auf eine Anfrage der Zentralstation hin - über eine Vermittlungsstation 28 an die Zentralstation 3 übermittelt.

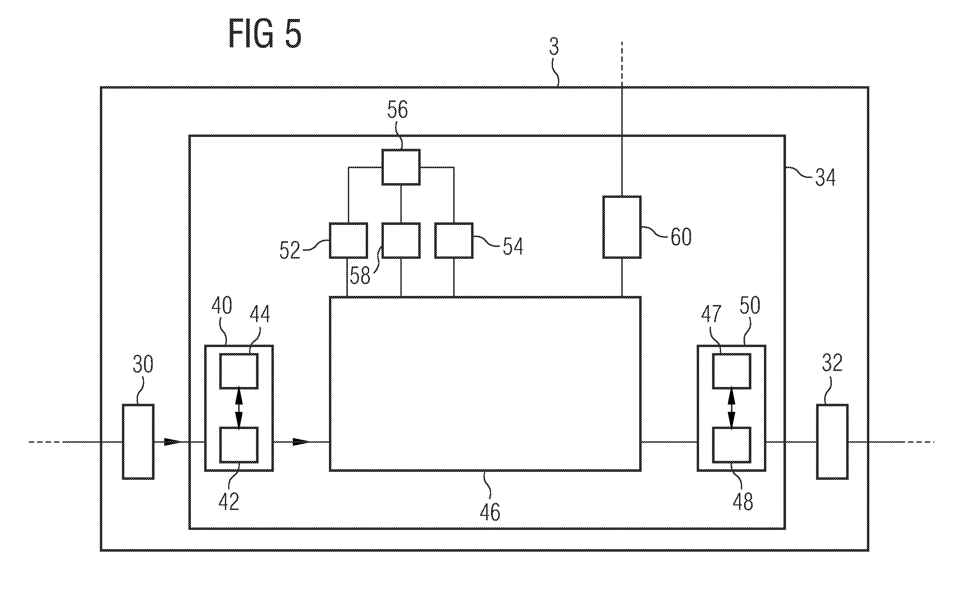

Die Zentralstation 3 weist eine fünfte Sende- und Empfangseinrichtung 30 zur Herstellung einer Verbindung zu der Vermittlungsstation 28 und eine sechste Sende- und Empfangseinrichtung 32 zur Herstellung eine Verbindung zu der Händlerstation 2 auf. Ferner weist die Zentralstation 3 eine mit den Sende- und Empfangseinrichtungen 30, 32 verbundene Buchungseinrichtung 34 auf, die in Fig. 5 näher erläutert wird.

Die Buchungseinrichtung 34 überträgt den von der Händlerstation 2 empfangenen Betrag über die Luftschnittstelle 24 zurück an das Mobilfunk-Endgerät 1. An einer zweiten Ausgabeeinrichtung 36 des Mobilfunk-Endgerätes 1 wird dieser Betrag angezeigt. Der Benutzer ist dann aufgefordert, bei Anzeige eines korrekten Betrages, eine Bestätigungsinformation an die Zentralstation 3 zu übertragen. Diese kann beispielsweise durch Betätigung einer bestimmten Taste einer zweiten Eingabeeinrichtung 38 des Mobilfunk-Endgerätes 1 geschehen. Bei Eingang der Bestätigungsinformation an die Zentralstation 3 erfolgt dann eine Abbuchung des Betrages von einem Konto des Benutzers. Die Abbuchung wird näher erläutert bei der Beschreibung zu Fig. 5.

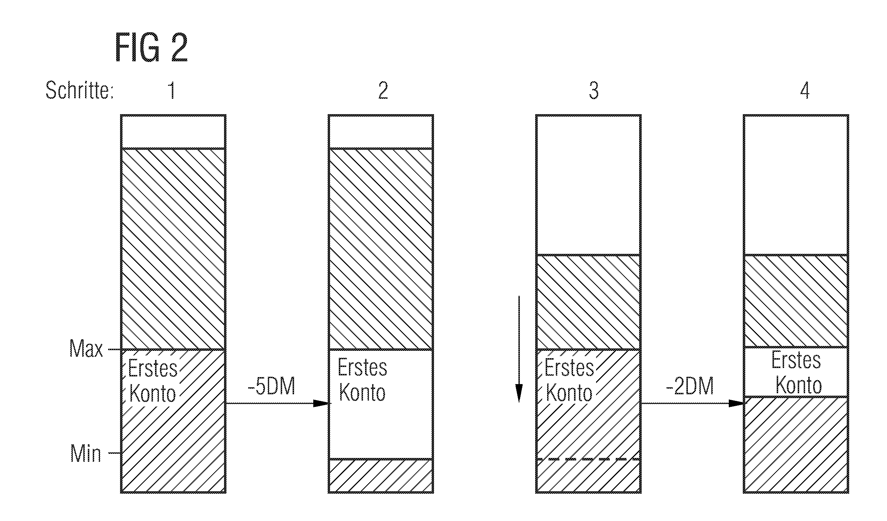

Fig. 2 zeigt in einer schematischen Darstellung eine Abbuchung einer Telefon-Dienstleistung, im Wert von beispielsweise 7 DM, nach der vorliegenden Erfindung. Dem ersten Konto werden zwei Schwellwerte zugeordnet: Ein oberer Schwellwert (Max) und ein unterer Schwellwert (Min). In dieser Ausführung liegt beispielsweise der obere Schwellwert bei 6 DM und der minimale bei 1 DM. Wird der untere Schwellwert während der Inanspruchnahme einer Telefon-Dienstleistung unterschritten (Schritt 2), so wird das erste Konto automatisch von dem zweiten Konto bis zum oberen Schwellwert aufgefüllt (Schritt 3). In diesem Beispiel wird also das erste Konto um 5 DM von dem zweiten Konto aufgefüllt. Ist der Restbetrag auf dem zweiten Konto kleiner 5 DM, so wird das erste Konto nur um diesen Restbetrag aufgefüllt. Bei diesem Schritt der Umbuchung von dem ersten Konto auf das zweite Konto ist eine Mehrwertsteuer abzuführen. Der restliche Betrag von 2 DM wird wie bisher von dem ersten Konto abgebucht (Schritt 4).

Insgesamt kann also das ganze Guthaben - also die Summe aus dem ersten Konto und dem zweiten Konto - für Telefonie-Dienstleistungen ausgegeben werden. Bei der Umbuchung zwischen dem ersten Konto und dem zweiten Konto wird wie bisher beim Aufladen des ersten Kontos die Mehrwertsteuer abgeführt. In diesem Beispiel wird die Mehrwertsteuer also jeweils in Tranchen zu je 5 DM abgebucht. Somit wird dem MTO keine Änderung des Verfahrens zur Abführung der Mehrwertsteuer auferlegt.

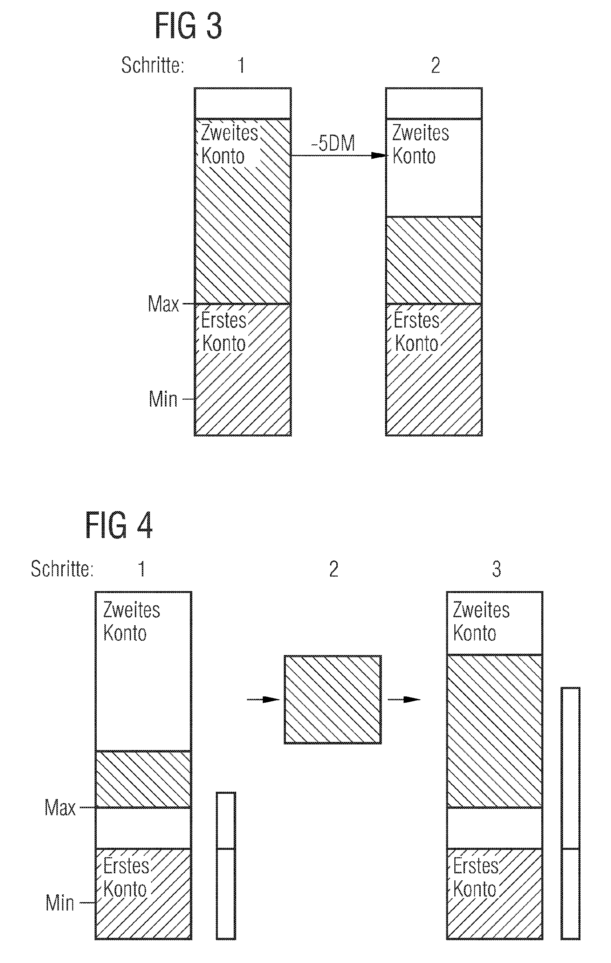

Fig. 3 zeigt in einer schematischen Darstellung eine Abbuchung eines elektronischen Guthabenbetrages zum Bezahlen von Waren und/oder Dienstleistungen. Möchte der Benutzer Waren und/oder Dienstleistungen bargeldlos bezahlen, so steht ihm dafür lediglich das Guthaben auf dem zweiten Konto zur Verfügung. Somit kann er also Waren und Dienstleistungen maximal im Wert des angezeigten Guthabens minus dem oberen Schwellwert des ersten Kontos ausgeben. In diesem Beispiel wird von dem zweiten Konto ein Betrag von 5 DM abgebucht. Bei diesem Schritt wird keine Mehrwertsteuer abgeführt - die Mehrwertsteuer wird später vom Händler abgeführt.

Fig. 4 zeigt in einer schematischen Darstellung eine Anzeige des elektronischen Guthabens auf dem mobilen Endgerät. Diese Anzeige kann beispielsweise auf einem Display des Mobilfunk-Endgerätes 1 dargestellt werden. In dieser Ausführung ist das erste Konto mit einem elektronischen Guthaben von 4 DM und das zweite Konto mit einem Betrag von 3 DM geladen. Die neben der schematischen Darstellung aufgeführte schmale Säule zeigt nur die Summe des Guthabens der beiden Konten auf dem Display an. In diesem Beispiel zeigt die Säule ein Restguthaben von 7 DM an. In Schritt 2 wird das zweite Guthaben mit einem elektronischen Guthaben von 6 DM aufgeladen. In Schritt 3 ist erkennbar, daß auf dem zweiten Konto nun ein Betrag von 9 DM geladen ist, während das erste Konto noch immer einen Betrag von 4 DM gespeichert hält. Die neben dem Schritt 3 dargestellte schmale Säule zeigt das Guthaben nach dem Aufladen an. Der Benutzer erkennt nun sehr schnell, daß das gemeinsame Konto mit einem Betrag von 13 DM geladen ist, wobei 4 DM für Telefonie-Dienstleistungen zur Verfügung stehen und 9 DM zum Bezahlen von Waren und/oder Dienstleistungen.

Figur 5 zeigt in einer schematischen Darstellung den Aufbau der Zentralstation 3. Die Zentralstation weist in der Buchungseinrichtung 34 eine Benutzer-Prüfeinrichtung 40 auf, die einen Benutzer-Vergleicher 42 und einen damit verbundenen Benutzerdatenspeicher 44 enthält. Der Benutzer-Vergleicher 42 ist mit der fünften Sende- und Empfangseinrichtung 30, die an einem öffentlichen Datennetz, beispielsweise Telefonnetz, angeschlossen ist, verbunden. Die von der Sende- und Empfangseinrichtung 30 empfangene Kennung des Benutzers wird in dem Benutzer-Vergleicher 42 mit Benutzer-Kennungen verglichen, die in dem Benutzerdatenspeicher 44 gespeichert sind. Findet eine Übereinstimmung der Benutzer-Kennung mit einer der in dem Benutzerdatenspeicher 44 gespeicherten Benutzer-Kennungen statt, so wird die Benutzer-Kennung an eine in der Buchungseinrichtung 34 vorgesehene zweite Prozessoreinrichtung 46 übermittelt. Anderenfalls wird die Verbindung unterbrochen.

Parallel zu dieser Kennungsüberprüfung findet einer Überprüfung der Händler-Kennung statt. Die Händler-Kennung wird von der sechsten Sende- und Empfangseinrichtung 32 empfangen und an einen Händler-Vergleicher 48 einer Händler-Prüfeinrichtung 47 übertragen. In dem Händler-Vergleicher 48 findet eine Überprüfung der Händler-Kennung mittels der in einem Händlerdatenspeicher 50 gespeicherten Händler-Kennungen statt. Findet eine Übereinstimmung der Händler-Kennung mit einer der in dem Händlerdatenspeicher 50 gespeicherten Händler-Kennungen statt, so wird die Händler-Kennung und der von der Händlerstation 2 übermittelte Betrag an die in der Buchungseinrichtung 34 vorgesehene zweite Prozessoreinrichtung 46 übermittelt. Anderenfalls wird die Verbindung unterbrochen.

Die Prozessoreinrichtung 46 ist mit einem ersten Speicher 52 und einem zweiten Speicher 54 verbunden. Dadurch hat die zweite Prozessoreinrichtung 46 Zugriff auf ein in dem ersten Speicher 52 gespeichertes erstes Konto und ein in dem zweiten Speicher gespeichertes zweites Konto 54. Ein zu zahlender Betrag durch Inanspruchnahme einer Telefonie-Dienstleistung wird mittels der zweiten Prozessoreinrichtung 46 von dem ersten Konto abgebucht. Der in dem ersten Speicher 52 gespeicherte Betrag wird entsprechend dezimiert. Die an der Händlerstation 2 erworbene Ware wird mittels Abbuchung eines Betrages von dem zweiten Konto bezahlt. Sobald die Bestätigungsinformation des Benutzers über den zu zahlenden Betrag empfangen wird, wird mittels der zweiten Prozessoreinrichtung 46 das in dem zweiten Speicher 54 gespeicherte Guthaben des zweiten Kontos um den zu zahlenden Betrag dezimiert.

Die Zentralstation weist ferner eine Umbuchungseinrichtung 56 auf. Diese Einrichtung ist mit dem ersten und zweiten Speicher 52, 54 verbunden. Unterschreitet das Guthaben auf dem ersten Konto einen unteren Konto-Schwellwert, so wird das erste Konto mittels einer in der Umbuchungseinrichtung 56 ausgeführten Wiederaufladefunktion von dem zweiten Konto aufgeladen. Entsprechend des umgebuchten Betrages wird dann eine Mehrwertsteuer abgeführt. Zudem wird in einer Abfrageroutine regelmäßig der in dem ersten Speicher 52 und zweiten Speicher 54 gespeicherte Betrag mittels der Umbuchungseinrichtung 56 addiert und der addierte Betrag in einem Transaktionsdatenspeicher 58 gespeichert. Diese Speicher ist mit der zweiten Prozessoreinrichtung 46 verbunden.

Ferner weist die Zentralstation eine mit der zweiten Prozessoreinrichtung 46 verbundene siebte Sende- und Empfangseinrichtung 60 zur Herstellung einer Verbindung zu mindestens einem Kreditinstitut auf. Unterschreitet das zweite Konto den oberen Konto-Schwellwert, so wird mittels der siebten Sende-und Empfangseinrichtung 60 eine Verbindung zu dem Mobilfunk-Endgerät 1 hergestellt und dem Nutzer eine Nachricht über den Kontostand übermittelt. Zugleich wird ihm die Möglichkeit gegeben, (vorzugsweise ebenfalls direkt über das Mobiltelefon 1) eine Anweisung an das Kreditinstitut zu geben, das ein Betrag auf das zweite Konto überwiesen wird.

An dieser Stelle sei darauf hingewiesen, daß alle oben beschriebenen Verfahrensschritte für sich alleine gesehen und in jeder Kombination, insbesondere die in den Figuren dargestellten Details, als erfindungswesentlich beansprucht werden. Abänderungen hiervon sind dem Fachmann geläufig.

## Patentansprüche

1. Verfahren zur Durchführung einer bargeldlosen Zahlungstransaktion mittels einer Händlerstation (2), einem Mobilfunk-Endgerät (1) eines Nutzers mit einer SIM-Karte, die mit einer identifizierenden Kennung versehen ist, und einer Zentralstation (3), die über ein Datennetz mit dem Mobilfunk-Endgerät (1) und der Händlerstation (2) verbunden ist,
**dadurch gekennzeichnet, daß**
ein erstes elektronisches Guthaben zur bargeldlosen Bezahlung einer Telefonie-Dienstleistung einem ersten Konto zugeordnet und in einem ersten Guthabenspeicher gespeichert wird,
und ein zweites elektronisches Guthaben zur bargeldlosen Bezahlung einer Ware oder Dienstleistung einem zweiten Konto zugeordnet und in einem zweiten Guthabenspeicher gespeichert wird, wobei das erste und das zweite Konto in einer Benutzerschnittstelle als ein gemeinsames Konto zusammengefaßt werden.

2. Verfahren nach Anspruch 1,
**dadurch gekennzeichnet, daß**
das in dem ersten Speicher gespeicherte erste elektronische Guthaben mittels einer Umbuchungsfunktion aus dem in dem zweiten Speicher gespeicherten zweiten elektronischen Guthaben aufgeladen wird.

3. Verfahren nach Anspruch 2,
**gekennzeichnet durch**
die folgenden Verfahrensschritte:
a) Einstellen eines unteren und oberen Konto-Schwellwertes des elektronischen Guthabens des ersten Kontos,
b) Signalisieren des Unterschreitens des unteren Konto-Schwellwertes des ersten Kontos **durch** Inanspruchnahme der Telefonie-Dienstleistung,
c) Auslösen einer Wiederaufladefunktion bei Unterschreiten des unteren Konto-Schwellwertes und
d) Aufladen des ersten Kontos bis zum oberen Konto-Schwellwert mit einem elektronischen Guthaben aus dem zweiten Konto.

4. Verfahren nach Anspruch 3,
**dadurch gekennzeichnet, daß**
der Schritt d) die Teilschritte
d1) Auslösen einer Dezimierfunktion beim Aufladen des ersten Kontos mit dem Aufladungs-Guthaben aus dem zweiten Konto,
d2) Dezimieren des zweiten elektronischen Guthabens des zweiten Kontos um das Aufladungs-Guthaben
umfaßt.

5. Verfahren nach einem der vorangehenden Ansprüche,
**dadurch gekennzeichnet, daß**
die Absendung einer Benachrichtigung an den Nutzer ausgelöst wird, sobald die Summe des ersten und zweiten elektronischen Guthabens, d. h. der Kontostand des gemeinsamen Kontos, den oberen Schwellwert des ersten Kontos unterschreitet.

6. Anordnung zur Durchführung des Verfahrens nach einem der vorangehenden Ansprüche,
**gekennzeichnet durch**
einen ersten Guthabenspeicher (52) zum Speichern des ersten elektronischen Guthabens,
einen zweiten Guthabenspeicher (54) zum Speichern des zweiten elektronischen Guthabens und
Guthabenverwaltungsmittel (46, 56, 58) zur gemeinsamen Verwaltung des ersten und zweiten elektronischen Guthabens, welche eine Benutzerschnittstelle zur Darstellung beider Guthaben in Form eines gemeinsamen Kontos realisieren.

7. Anordnung nach Anspruch 6,
**dadurch gekennzeichnet, daß**
die Guthabenverwaltungsmittel
einen Transaktionsdatenspeicher (58) zum Speichern einer Summe aus erstem und zweitem elektronischen Guthaben als Kontostand des gemeinsamen Kontos und
eine Umbuchungseinrichtung (56), die mit dem ersten Speicher (52), dem zweiten Speicher (54) und dem Transaktionsdatenspeicher (58) verbunden ist, zur Durchführung einer Wiederaufladefunktion des ersten Kontos,
umfassen.

8. Anordnung nach Anspruch 6 oder 7,
**dadurch gekennzeichnet, daß**
die Guthabenverwaltungsmittel eine Benutzer-Prüfeinrichtung (40), eine Händler-Prüfeinrichtung (47) und eine mit beiden verbundenen Verarbeitungseinrichtung zur Realisierung einer Authentisierungsprüfung bei einem Benutzer und einem Händler und zur Steuerung eines Abbuchungsvorganges im Ansprechen auf ein positives Ergebnis der Authentisierungsprüfung umfassen.
